# EUROPÄISCHE PATENTSCHRIFT

(11) **EP 0 611 352 B1**
(45) Veröffentlichungstag und Bekanntmachung des Hinweises auf die Patenterteilung: **19.07.1995**
(21) Anmeldenummer: 92921538.2
(22) Anmeldetag: 21.10.1992
(51) Int. Cl.: B60T 8/88

(54) **SCHALTUNGSANORDNUNG FÜR EINE BREMSANLAGE MIT BLOCKIERSCHUTZ-UND/ODER ANTRIEBSSCHLUPFREGELUNG**
CIRCUITRY FOR ANTILOCK OR DRIVE SLIP CONTROLLED BRAKING SYSTEM
ENSEMBLE DE CIRCUITS POUR DISPOSITIF DE FREINAGE POURVU D'UN SYSTEME ANTIBLOCAGE ET D'UN SYSTEME ANTIPATINAGE

(30) Priorität: 12.11.1991 DE 4137124
(43) Veröffentlichungstag der Anmeldung: 24.08.1994
(73) Patentinhaber: ITT Automotive Europe GmbH, 60488 Frankfurt am Main (DE)
(72) Erfinder: BLECKMANN, Hans-Wilhelm, D-6350 Bad Nauheim 3 (DE); FENNEL, Helmut, D-6232 Bad Soden (DE)
(74) Vertreter: Blum, Klaus-Dieter, Dipl.-Ing.
(86) Internationale Anmeldenummer: EP9202410
(87) Internationale Veröffentlichungsnummer: WO9309986

(56) Entgegenhaltungen:
- EP-A- 0 322 141
- EP-A- 0 379 669
- DE-A- 2 928 981
- DE-A- 3 234 637
- GB-A- 2 175 717

## Beschreibung

Die Erfindung bezieht sich auf eine Schaltungsanordnung, die für eine Bremsanlage mit Blockierschutz- und/oder Antriebsschlupfregelung vorgesehen ist und die mit Schaltkreisen zur Aufbereitung von Sensorsignalen, die das Drehverhalten der einzelnen Fahrzeugräder wiedergeben, mit Reglerschaltkreisen zur Auswertung und Verarbeitung der aufbereiteten Sensorsignale und zur Erzeugung von Bremsdruck-Steuersignalen, die in die Druckmittelwege der Bremsanlage eingefügte Magnetventile ansteuern, mit Überwachungsschaltkreisen, denen die aufbereiteten Sensorsignale zuführbar sind und die im Störfall die Regelung teilweise oder vollständig stillegen oder abschalten, sowie mit Schaltkreisen zum Austauschen und Vergleichen von Signalen der Reglerschaltkreise mit entsprechenden Signalen der Überwachungsschaltkreise ausgerüstet ist.

Aus der Patentschrift DE 32 34 637 C2 ist bereits eine derartige Schaltungsanordnung zur Steuerung und Überwachung einer blockiergeschützten Bremsanlage bekannt. Nach dieser Patentschrift werden die aufbereiteten Radsensorsignale in zwei völlig gleichen, nach gleichem Programm arbeitenden Microcontrollern, denen die aufbereiteten Sensorsignale zugeführt werden, parallel ausgewertet und verarbeitet. Die Ausgangssignale der beiden Microcontroller und interne Signale oder Zwischenergebnisse werden ausgetauscht und verglichen. Da den beiden Controllern die gleichen Sensorsignale zugeführt werden, müssen bei intaktem System die externen und internen Signale übereinstimmen. Dieses Kriterium wird zur Überwachung des Systems ausgewertet. Wird eine Nichtübereinstimmung festgestellt, führt dies zur teilweisen oder vollständigen Stillegung der Blockierschutzregelung.

Ein solches System benötigt also zwei hochwertige Microcontroller, obwohl zur Erzeugung der eigentlichen Bremsdruck-Steuersignale ein einziger Microcontroller genügen würde. Nach diesem Patent wird also aus Sicherheitsgründen der Aufwand an Microcontrollern verdoppelt.

Aus der Offenlegungsschrift DE 29 28 981 A1 ist eine blockiergeschützte Bremsanlage bekannt, die mindestens einen Regel-Microcomputer und einen weiteren Microcomputer für die Prüfung und Überwachung der Regelkanäle aufweist. Mit Hilfe dieses Prüf-Microcomputers werden Prüfsignale erzeugt und über die zu den Regel-Microcomputern zugehörigen Eingangsschaltkreise in die Regelkanäle eingespeist. Mit den Prüfsignalen werden Regelvorgänge simuliert und die Reaktion des Regelcomputers auf diese simulierten Signale festgestellt. Voraussetzung für die Prüfvorgänge ist, daß keine geregelte Bremsung stattfindet und daß die Fahrzeuggeschwindigkeit über einem vorgegebenen Grenzwert liegt. Außerdem werden mit dem Prüf-Microcomputer während einer geregelten Bremsung zur Fehlererkennung die Dauer einiger Regelsignale und einiger Ventilansteuerungssignale auf Einhaltung von Grenzwerten überwacht. Schließlich ist noch eine Selbstprüfung des Microcomputers vorgesehen.

Trotz des relativ hohen Aufwandes lassen sich mit einer solchen Anordnung natürlich nur bestimmte Fehler oder Fehlerarten erkennen, weil im Gegensatz zu der zuvor beschriebenen Schaltungsanordnung keine redundante Signalverarbeitung in Verbindung mit einem Vergleich der redundant verarbeiteten Signale auf Übereinstimmung stattfindet.

Der Erfindung liegt nun die Aufgabe zugrunde, ein ABS oder ein ASR-System zu entwickeln, das die Vielfalt und Sicherheit der Fehlererkennung eines Systems, das auf redundante Signalverarbeitung und Stillegung der Regelung bei Nichtübereinstimmung der redundant verarbeiteten Signale beruht, aufweist und das sich dennoch mit vergleichsweise geringem Aufwand herstellen läßt.

Es hat sich herausgestellt, daß diese Aufgabe mit einer Schaltungsanordnung der eingangs genannten Art zu lösen ist, deren Besonderheit darin besteht, daß die Überwachungsschaltkreise im wesentlichen aus Schaltkreisen zur Geschwindigkeitsaufbereitung, aus Schaltkreisen zur Erzeugung von aus der Radgeschwindigkeit abgeleiteten Signalen, wie Verzögerungs- und Beschleunigungssignalen, Rucksignalen, Referenzsignalen usw., sowie aus Schaltkreisen zur vereinfachten Nachbildung der Regelalgorithmen bzw. Regelphilosophie, insbesondere zur Ermittlung der Regelphasen, die sich bei Auswertung der abgeleiteten Signale nach den Algorithmen der Reglerschaltkreise ergeben, und aus Schaltkreisen zur Korrelation der Ausgangssingale der Regelphilosophie-Nachbildungsschaltkreise mit den Bremsdruck-Steuersignalen bestehen.

Erfindungsgemäß werden also die aufbereiteten Sensorsignale in einem Reglerschaltkreis und in einem Überwachungsschaltkreis redundant, wenn auch unabhängig voneinander parallel verarbeitet, und zwar derart, daß ein Datentransfer und Vergleich in den Regler- und in den Überwachungsschaltkreisen verarbeiteten Signalen möglich ist. Dabei läßt sich die Datenverarbeitung in den Überwachungsschaltkreisen im Vergleich zu den Reglerschaltkreisen ohne Einbußen an die Sicherheit der Fehlererkennung wesentlich vereinfachen. Beispielsweise genügt es, die Geschwindigkeitsaufbereitung in den Überwachungsschaltkreisen derart auszuführen, daß beim Vergleich mit den entsprechenden Signalen der Reglerschaltkreise lediglich festgestellt wird, ob die aufbereiteten Geschwindigkeitssignale innerhalb vorgegebener Toleranzbänder liegen. Ähnliches gilt auch für die Erzeugung und den Vergleich der abgeleiteten Signale, nämlich der Beschleunigungssignale, Referenzsignale usw.. Erfindungswesentlich ist die "Nachbildung" der Regelphilosophie, die zur Verarbeitung der abgeleiteten Signale in den Überwachungsschaltkreisen zur Anwendung gelangt. Diese Nachbildung der Regelphilosophie bzw. der Regelalgorithmen, mit denen in den Reglerschaltkreisen die Bremsdrucksteuersignale mit großem Rechenaufwand unter Berücksichtigung zahlreicher Eingangsdaten, Filterkriterien usw. genau ermittelt werden, besitzt eine vergleichsweise einfache Struktur. Insbesondere werden durch die Schaltkreise, die diese Nachbildung darstellen, durch Auswertung der abgeleiteten Signale nach den grundsätzlich gleichen Regelparametern, die auch für die Regelphilosophie der Reglerschaltkreise gelten, die Regelphasen ermittelt. Durch Korrelation der Ausgangssignale dieser Nachbildungs-Schaltkreise mit den tatsächlichen Bremsdruck-Steuersignalen, wobei die genaue Auflösung dieser Signale innerhalb der Regelzyklen keine Rolle spielt, werden Fehler im System, d.h. in den Regler-Schaltkreisen und/oder in den Überwachungsschaltkreisen, erkennbar. Durch die beschriebene Vereinfachung der Überwachungs-Schaltkreise wird es möglich, für die Regelung einen Hochleistungs-Microcontroller, z.B. einen 16-bit-Microcontroller, für die Überwachung dagegen einen sehr viel billigeren 8-bit-Microcontroller einzusetzen.

In den beigefügten Unteransprüchen sind vorteilhafte Ausführungsarten der Erfindung beschrieben. Beispielsweise besteht ein Ausführungsbeispiel der Erfindung darin, daß die Schaltkreise zum Austauschen und Vergleichen von Signalen des Regler-Microcontrollers mit entsprechenden Signalen des Überwachungs-Microcontrollers und die Schaltkreise zur Korrelation der Ventil-Ansteuerungssignale mit den Signalen der Nachbildungsschalktreise als integrale Bestandteile des Regelungs-Microcontrollers und des Überwachungs-Microcontrollers ausgebildet sind.

Ferner besteht ein Ausführungsbeispiel der Erfindung darin, daß der Regelungs-Microcontroller und/oder der Überwachungs-Microcontroller mit zusätzlichen Schaltkreise zum Überprüfen und Vergleichen der Geschwindigkeitssignale, der abgeleiteten Signale, der Regelphasen, der Ventilansteuerungszeiten usw. nach Plausibilitätskriterien ausgerüstet sind.

Schließlich ist es nach einem Ausführungsbeispiel der Erfindung noch vorgesehen, in den Überwachungsschaltkreisen die Auswertung und Verarbeitung der Daten auf Basis der aus den Reglerschaltkreisen übernommenen, durch Vergleich mit den entsprechenden Daten der Überwachungsschaltkreise auf Einhaltung der Toleranzen überprüften Daten fortzusetzen.

Weitere Merkmale, Vorteile und Anwendungsmöglichkeiten der Erfindung gehen aus der folgenden Beschreibung von Ausführungsbeispielen anhand der beigefügten Abbildungen hervor.

Es zeigen in vereinfachter Darstellung
- Fig. 1: in Blockdarstellung die wichtigsten Komponenten einer Schaltungsanordnung nach der Erfindung,
- Fig. 2: eine Erweiterung der Schaltungsanordnung nach Fig. 1 und
- Fig. 3: ein vereinfachtes Flußdiagramm zur Erläuterung der Funktionsweise einer Schaltungsanordnung nach der Erfindung.

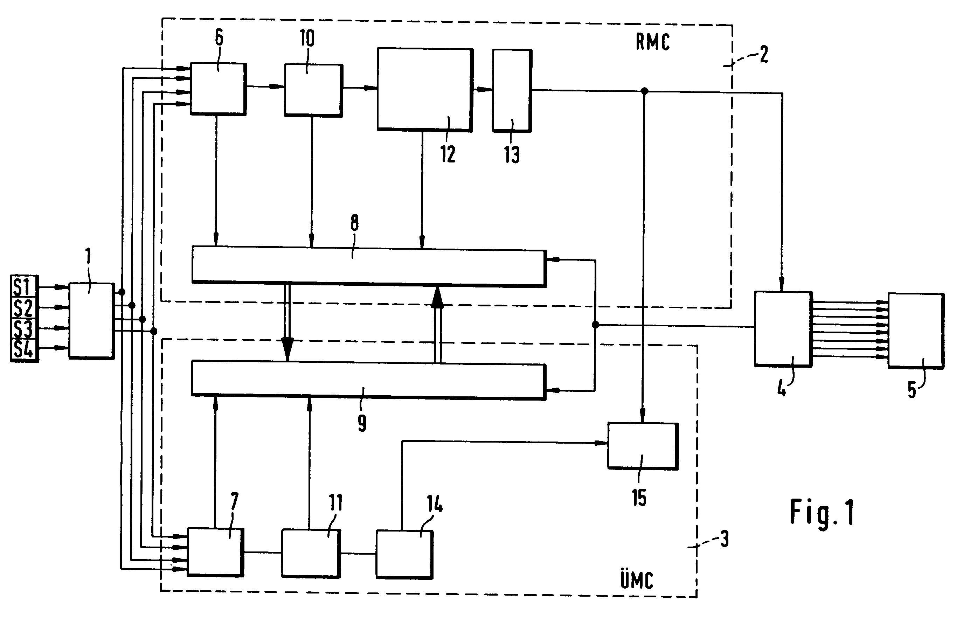

Nach Fig. 1 besteht die erfindungsgemäße Schaltungsanordnung im wesentlichen aus einem Trigger 1 bzw. einer Schaltungsanordnung zur Aufbereitung von Sensorsignalen, aus einem Regelungs-Microcontroller RMC (2), einem Überwachungs-Microcontroller ÜMC (3) und aus einer Endstufe 4, an deren Ausgänge elektrisch steuerbare Hydraulikventile 5 angeschlossen sind. "5" symbolisiert hier einen Ventilblock, der sich bei einem Antiblockiersystem (ABS) mit radindividueller Regelung aus vier Einlaß- und vier Auslaßventilen zusammensetzen kann.

Den Eingängen des Triggers 1 werden hier die Signale von vier Radsensoren S1 bis S4 zugeführt. Solche Radsensoren liefern im allgemeinen ein Wechselsignal, dessen Frequenz der Radgeschwindigkeit proportional ist. Am Ausgang des Triggers 1 steht ein entsprechendes Rechtecksignal oder eine Pulsfolge zur Verfügung.

Regelungsschaltkreise 2 und Überwachungsschaltkreise 3 werden also im vorliegenden Ausführungsbeispiel durch die Microcontroller RMC (2) bzw. ÜMC (3) realisiert. Zur Erzeugung der Bremsdruck-Steuersignale bzw. der Ventilbetätigungssignale wird hierzu ein relativ aufwendiger Hochleistungs-Microcontroller (2), nämlich ein 16-bit-Microcontroller verwendet. Dagegen genügt für die unabhängige Datenverarbeitung in dem Überwachungs-Microcontroller 2, der zur Fehlererkennung dient, ein 8-bit-Microcontroller ÜMC (3), obwohl in beiden Microcontrollern die aufbereiteten Sensorsignale, in grundsätzlich gleicher Weise und derart verarbeitet werden, daß die Daten der einzelnen Verarbeitungsstufen ausgetauscht - und zum Erkennen von Fehlern - auf Übereinstimmung verglichen werden können. Trotz der Verwendung verschiedener Microcontroller findet eine weitgehend redundante Verarbeitung der aufbereiteten Sensorsignale in den Regelungs- und in den Überwachungsschaltkreisen statt. Die Vereinfachung und Aufwandverringerung im Vergleich zu herkömmlichen Systemen mit zwei gleichen Microcontrollern wird vor allem durch eine Beschränkung auf für die Regelung wesentliche Signale, durch eine Beschränkung auf "Toleranzbänder", innerhalb der bei fehlerfreien Systemen die verglichenen Daten liegen müssen, und durch die Definition einer "Nachbildung" der Regelphilosophie erreicht. Diese Nachbildung arbeitet grundsätzlich nach den gleichen Kriterien und Regelparametern, z.B. Schlupf, Beschleunigung und Verzögerung usw., und nach den gleichen Algorithmen wie die eigentliche Regelphilosophie.

Die Nachbildung der Regelphilosophie beschränkt sich in einem Ausführungsbeispiel der Erfindung auf die Ermittlung oder Erkennung der Regelphasen. Durch Korrelation der im Überwachungs-Microcontroller ermittelten Regelphasen mit den Ventilansteuerungssignalen bzw. aus den Schaltstellungen der einzelnen Ventile ist mit hoher Genauigkeit erkennbar, ob das System fehlerfrei ist oder ob eine Fehlfunktion vorliegt. Bei der Nachbildung der Regelphilosophie wird in diesem Fall auf die Auflösung der Regelzyklen, auf die genauere Errechnung der Impulszeiten innerhalb der Regelzyklen, auf die genaue Bemessung des Druckaufbaues und Druckabbaues usw. verzichtet. Auch andere aufwendige Rechenprozesse, die in den Regelschaltkreisen zur Filterung der Signale zur Linearisierung des Druckaufbaues und Druckabbaues, zur Druckmodellbildung usw. dienen, werden zur Überwachung der Funktion nicht benötigt. Auf diese Schaltkreise oder Rechenschritte, für die in der Praxis ein sehr erheblicher Teil des gesamten Rechenaufwandes aufgewendet wird, kann ohne Einbußen an die Sicherheit der Fehlererkennung verzichtet werden.

Nach Fig. 1 werden die aufbereiteten Sensorsignale in den beiden Controllern 2 und 3 zunächst parallel in Geschwindigkeitsaufbereitungs-Schaltkreisen 6 bzw. 7 verarbeitet. Es entstehen Signale bzw. Daten, die die Geschwindigkeiten der einzelnen Räder darstellen. Über die Datentransfer-, Datenaustausch- und Vergleicher-Schaltkreise 8 und 9 wird festgestellt, ob die redundant gewonnenen Rad-Geschwindigkeitssignale übereinstimmen. In einem bevorzugten Ausführungsbeispiel der Erfindung werden dem Vergleicher Toleranzbänder zugrunde gelegt; eine ordnungsgemäße Funktion wird also bereits dann als gegeben angenommen, wenn die entsprechenden Geschwindigkeitsdaten innerhalb eines vorgegebenen Toleranzbandes liegen. Ist diese Bedingung erfüllt, kann nach einer weiteren Ausführungsart der Erfindung die Signal- bzw. Datenverarbeitung in dem Überwachungs-MC auf Basis der im Regelungs-MC gewonnenen, durch den Datenaustausch zum ÜMC (3) gelangten Daten fortgesetzt werden. Dies ist z.B. dann von Vorteil, wenn in dem RMC (2) die Geschwindigkeitsaufbereitung mit höherer Genauigkeit oder höherer Auflösung als im ÜMC erfolgt.

Nach der Geschwindigkeitsaufbereitung schließt sich in beiden Microcontrollern 2,3 in Schaltkreisen 10,11 die Ermittlung der für die Regelung benötigten abgeleiteten Signale an, insbesondere der Beschleunigungs- und Verzögerungssignale, der Fahrzeugreferenzgeschwindigkeit, ggf. der Rucksignale usw.. Durch Austausch und Vergleich der Daten über die Schaltkreise 8 und 9 wird die Übereinstimmung dieser abgeleiteten Signale überwacht, wobei wiederum Toleranzbänder zugrunde gelegt werden können. Eine Weiterverarbeitung der Daten im Überwachungs-MC 3 auf Basis der übertragenen Daten ist ebenfalls möglich.

Auf der Grundlage dieser abgeleiteten Signale wird nun nach verschiedenen Regelalgorithmen, die unter den Sammelbegriff "Regelphilosophie" zusammengefaßt sind, der zur Blockierschutzregelung oder Antriebsschlupfregelung erforderliche Eingriff in den Bremsdruckverlauf bzw. die Bremsaktivierung ermittelt. Der an dieser Stelle betriebene Aufwand an Rechenprozessen unter der Berücksichtigung zahlreicher Einflußgrößen ist von maßgeblicher Bedeutung für die Qualität des Regelungssystems. Die Ergebnisse dieser Rechenprozesse, die in einem Schaltkreis oder Schaltblock 12 stattfinden, führen schließlich zur Bemessung der Ansteuerzeiten der einzelnen Bremsdrucksteuerventile, nämlich der bekannten Bremsdruck-Einlaß und -Auslaßventile. Die Festlegung der Ventilansteuerzeiten geschieht in dem Schaltkreis 13 des Regelungs-Microcontrollers 2. Mit den Ausgangssignalen dieses Schaltkreises 13 werden schließlich über die Endstufe 4 die Magnetventile 5 oder Bremsdruck-Steuerventile betätigt.

Anstelle der aufwendigen Berechnung der Regelphilosphie im Block 12 des Regelungs-Microcontrollers 2 findet im Überwachungs-Microcontroller 3 lediglich eine "Nachbildung" der Regelphilosophie in einem Schaltkreis 14 statt. Aus den abgeleiteten Signalen, die in dem Schaltkreis 11 bestimmt wurden, ermittelt der Schaltkreis 14 die augenblicklichen Regelphasen. In einem Ausführungsbeispiel einer erfindungsgemäßen Schaltungsanordnung für ein ABS werden sechs verschiedene Phasen definiert, von denen eine Phase (Phase 0) den Zustand außerhalb der Regelung, eine zweite Regelphase (Phase 1) den Einlauf des Rades in einen instabilen Bereich, eine weitere Phase (Phase 2) den instabilen Zustand eines Rades, eine weitere Phase (Phase 3) die Wiedergewinnung der Stabilität, eine weitere Regelphase (Phase 4) den Übergang des Rades vom instabilen in den stabilen Bereich der Regelung und schließlich eine weitere Regelphase (Phase 5) den Zeitbereich kennzeichnen, in dem sich die Radgeschwindigkeit oberhalb der sogen. Fahrzeugreferenzgeschwindigkeit befindet. Eine Beschränkung auf weniger Regelphasen oder eine noch genauere Einteilung ist durchaus möglich. Durch Korrelation der mit Hilfe der Regelphilosophie-Nachbildung 14 ermittelten Regelphasen mit den tatsächlichen Ventilansteuersignalen, die der Schaltkreis 13 des RMC 2 liefert, lassen sich in der Praxis mit hoher Sicherheit Fehlfunktionen erkennen. Eine genauere Auflösung der Ventilansteuersignale - z.B. Länge und Anzahl der einzelnen Druckaufbaupulse während einer bestimmten Regelphase usw. - ist zur Fehlererkennung nicht erforderlich. Diese Korrelation der Regelphasen mit den Ventilansteuersignalen wird in einem Schaltkreis 15 des Überwachungs-Microcontrollers 3 durchgeführt.

Die Reaktion der Endstufe 4 auf die Ventilansteuerungssignale wird in dem Ausführungsbeispiel nach Fig. 1 den Datentransfer- und Vergleicherschaltungen 8,9 der beiden Microcontroller 2,3 rückgemeldet. Auf diese Weise wird auch die Endstufe 4 in die Überwachung eingeschlossen.

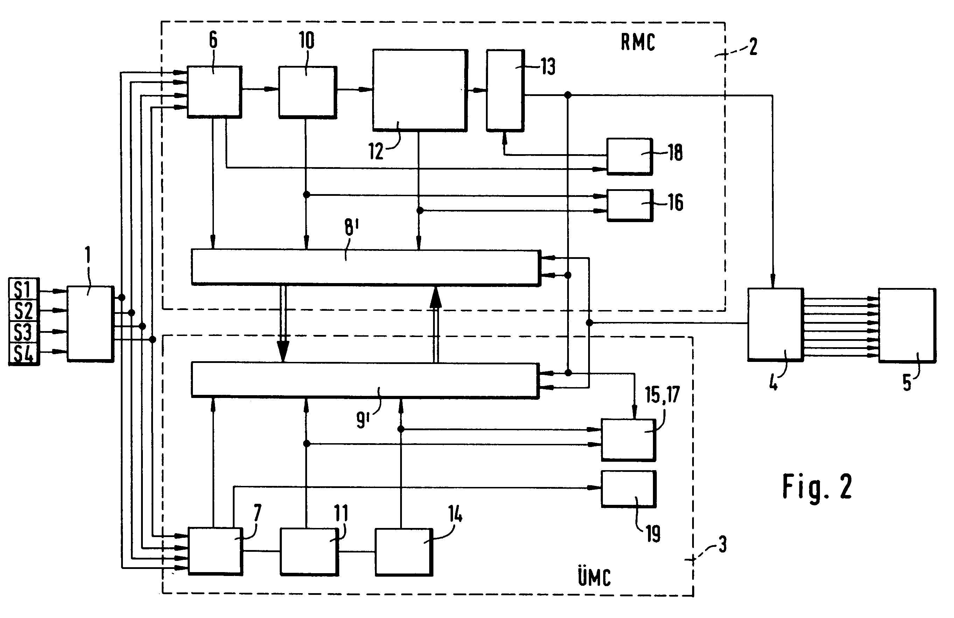

Die Schaltungsanordnung nach Fig. 2 unterscheidet sich von dem beschriebenen Ausführungsbeispiel nur durch einige zusätzliche Schaltkreise und Überwachungsfunktionen. Sowohl in dem Regelungs-Microcontroller 2 als auch in dem Überwachungs-Microcontroller 3 werden unabhängig voneinander die abgeleiteten Signale untereinander und/oder mit den durch den Regelphilosophieblock 12 bzw. mit Hilfe der Regelphilosophie-Nachbildung 14 ermittelten Daten auf "Plausibilität" überwacht. Ist die festgestellte Signalkombination widersprüchig oder physikalisch nicht möglich, weist dies auf einen Fehler hin, weshalb dadurch in nicht dargestellter Weise eine teilweise oder zeitlich begrenzte Stillegung der Regelung oder eine totale Abschaltung erfolgt. Die Schaltkreise zur Plausibilitätsüberwachung sind in Fig. 2 mit 16 im RMC und 17 im ÜMC bezeichnet.

Des weiteren ist in dem Ausführungsbeispiel nach Fig. 2 ein Testsignal-Erzeugerschaltkreis 18 vorgesehen, der über den Ventilansteuerungs-Schaltkreis 13 Ventiltestsignale hervorruft, die so kurz sind, daß sie zwar keine Ventilreaktion hervorrufen, jedoch Fehler im Signalweg erkennen lassen. Im Ausführungsbeispiel nach Fig. 2 ist der Testsignalerzeuger 18 im Regelungs-Microcontroller RMC integriert.

Dem Schaltkreis 18 und einem entsprechenden Schaltkreis 19, der in dem Überwachungs-Microcontroller 3 integriert ist, werden Ausgangssingale der Geschwindigkeitsaufbereitung 6 bzw. 7 zugeführt. Diese Schaltkreise 18,19 dienen u.a. zur redundanten Überwachung der Eingangsschaltkreise, insbesondere des Triggers 1 und indirekt der Radsensoren S1 bis S4; ein Kurzschluß oder eine Leitungsunterbrechung zwischen den Radsensoren und dem Trigger 1 wird nämlich in Form einer niederfrequenten Schwingung oder eines Dauersignals den GeSchwindigkeitsaufbereitungs-Schaltkreisen 6 bzw. 7 gemeldet. Mit Hilfe der Schaltkreise 18,19 werden dann solche und andere Fehler erkannt und führen zur Stillegung oder Abschaltung der Regelung.

Die Ausgangssignale der Ventilansteuerung 13 werden bei der Schaltungsanordnung nach Fig. 2 zusätzlich den Datentransfer- und Vergleicherschaltungen 8',9' zugeleitet. Über diese beiden Schaltkreise 8',9' werden folglich unabhängig voneinander die über die Endstufe 4 rückgeführten Ventilbetätigungssignale mit den Ventilansteuerungssignalen des Schaltkreises 13 auf Übereinstimmung verglichen. Außerdem werden die Ventilansteuersignale und die Ventilbetätigungssignale auch über die Schaltungen 8',9' ausgetauscht. Bei Nichtübereinstimmung der Signale wird auch von diesen Schaltkreisen direkt die Stillegung oder Abschaltung der Regelung ausgelöst.

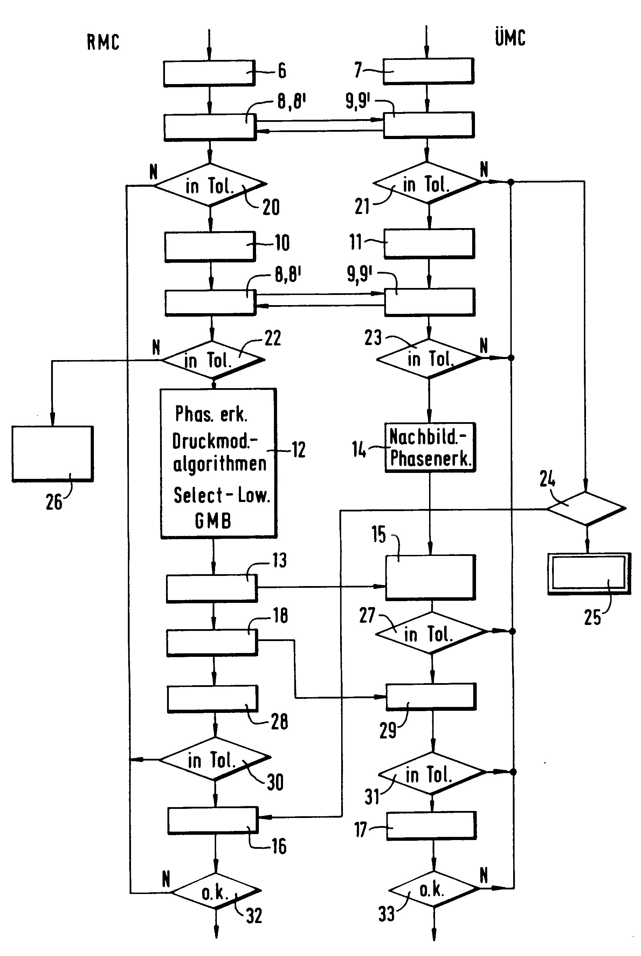

Die Funktionsweise einer Schaltungsanordnung nach der Erfindung, die weitgehend dem Ausführungsbeispiel nach Fig. 2 entspricht, wird im folgenden anhand des Flußdiagrammes nach Fig. 3 erläutert. Soweit möglich, wurden die gleichen Bezugsziffern wie in den Fig. 1 und 2 verwendet.

In dem Regelungs-Microcontroller RMC (2) und dem Überwachungs-Microcontroller ÜMC (3) werden die in den Schaltkreisen oder Funktionsblöcken 6,7 unabhängig voneinander gewonnenen Rad-Geschwindigkeitsdaten über die Datentransfer und Vergleicherschaltkreise 8,9;8',9' ausgetauscht und auf Übereinstimmung verglichen. Liegen die Daten "innerhalb der Toleranzbänder", werden in den Schaltkreisen 10 und 11 unabhängig voneinander die abgeleiteten Signale (Schlupf, Beschleunigung und Verzögerung usw.) gebildet. Nach Datenaustausch über die Schaltkreise 8,9 bzw. 8',9' schließt sich die Berechnung in dem Regelphilosophieblock 12 bzw. in dem Nachbildungs-Schaltkreis 14 an. In Fig. 3 ist angedeutet, daß zu der "Regelphilosohpie" u.a. die Phasenerkennung, die verschiedenen Druckmodulationsalgorithmen, die Anwendung von Auswahlkriterien, wie select-low, eine Giermomentenbeschränkung (GMB) gehören. Die Nachbildung der Regelphilosophie (14) kann sich auf die Regelphasenerkennung beschränken.

Die Verzweigungsstellen 20,21,22,23 im Datenfluß führen zur Stillegung (24) oder gar Abschaltung der gesamten Blockierschutz- oder Antriebsschlupfregelung, wenn die ausgetauschten Signale nicht übereinstimmen bzw. außerhalb der vorgegebenen Toleranzbänder liegen. Ein Funktionsblock 26 deutet an, daß bei Nicht-Übereinstimmung, festgestellt durch die Verzweigungsstellen 20 oder 21, bzw. Überschreiten der Toleranzbänder, der Fehler klassifiziert wird, bevor eine Stillegung oder Abschaltung erfolgt.

Nach der Datenverarbeitung in dem Block 12 folgt in den Schaltkreisen 15 die Korrelation der Ventilansteuerzeiten mit den Ausgangssignalen der Regelphilosophie-Nachbildung 14 bzw. mit den Regelphasen. Auch hier genügt es, wenn die verglichenen Daten innerhalb bestimmter Toleranzbänder liegen. Ist dies nicht der Fall, wird über eine Entscheidungsstufe 27 wiederum eine Teilstillegung (24) oder die Abschaltung (25) herbeigeführt.

Die Erzeugung von Testsignalen oder Testpulsen mit Hilfe eines Schaltkreises 18, die Auswertung der Rückmeldung dieser Testpulse, symbolisiert durch die Funktionsblöcke 28 und 29, die Reaktion auf fehlerhafte Rückmeldung, die über die Verzweigungen 30 oder 31 zum Stillegen oder Abschalten der Regelung führt, sowie schließlich die Anwendung von Plausibilitätskriterien mit Hilfe der Schaltkreise 16 und 17 nach Fig. 2, sind ebenfalls in dem Flußdiagramm nach Fig. 3 dargestellt. Sind die Plausibilitätskriterien nicht erfüllt, führt dies wegen der Signalverzweigungen 32,33 wiederum zur Stillegung oder Abschaltung der Regelung.

Der dargestellte Programmlauf geschieht in einer Schleife. Nach Durchlauf der dargestellten Funktionen wird das Programm erneut gestartet. In dem Flußdiagramm nach Fig. 3 sind verständlicherweise nur die wichtigsten Funktionen wiedergegeben. Je nach spezieller Anwendungsart treten weitere Funktionen hinzu.

## Patentansprüche

1. Schaltungsanordnung für eine Bremsanlage mit Blockierschutz- und/oder Antriebsschlupfregelung,
mit Schaltkreisen zur Aufbereitung von Sensorsignalen, die das Drehverhalten der einzelnen Fahrzeugräder wiedergeben, mit Reglerschaltkreisen zur Auswertung und Verarbeitung der aufbereiteten Sensorsignale und zur Erzeugung von Bremsdruck-Steuersignalen, die in die Druckmittelwege der Bremsanlage eingefügte Magnetventile ansteuern,
mit Überwachungsschaltkreisen, denen die aufbereiteten Sensorsignale zuführbar sind und die im Störfall die Regelung teilweise oder vollständig stillegen oder abschalten, und die Schaltkreise (7) zur Geschwindigkeitsaufbereitung, Schaltkreise (11) zur Erzeugung von aus der Radgeschwindigkeit abgeleiteten Signalen, wie Verzögerungs- und Beschleunigungssignalen, Rucksignalen und Referenzsignalen umfassen,
sowie mit Schaltkreisen zum Austauschen und Vergleichen von Signalen der Reglerschaltkreise mit entsprechenden Signalen der Überwachungsschaltkreise, dadurch **gekennzeichnet,** daß die Überwachungsschaltkreise (3) Regelalgorithmusnachbildungsschaltkreise (14) zur vereinfachten Nachbildung der Regelalgorithmen, insbesondere zur Ermittlung der Regelphasen, die sich bei Auswertung der abgeleiteten Signale nach den Algorithmen der Reglerschaltkreise (2) ergeben, und Schaltkreise (15) zur Korrelation der Ausgangssignale der Regelalgorithmusnachbildungsschaltkreise (14) mit den Bremsdruck-Steuersignalen enthalten.

2. Schaltungsanordnung nach Anspruch 1, dadurch **gekennzeichnet,** daß die Reglerschaltkreise (2) und die zugehörigen Schaltkreise zur Geschwindigkeitsaufbereitung Bestandteile eines Regelungs-Microcontrollers (RMC) und die Überwachungsschaltkreise (3) Bestandteil eines Überwachungs-Microcontrollers (ÜMC) sind sowie daß der Überwachungs-Microcontroller (ÜMC) im Vergleich zu dem Regelungs-Microcontroller (RMC) eine vereinfachte Struktur besitzt.

3. Schaltungsanordnung nach Anspruch 2, dadurch **gekennzeichnet,** daß als Regelungs-Microcontroller (RMC) ein 16-bit-Hochleistungs-Microcontroller und als Überwachungs-Microcontroller (ÜMC) ein 8-bit-Microcontroller vorgesehen sind.

4. Schaltungsanordnung nach Anspruch 2 oder 3, dadurch **gekennzeichnet,** daß die Schaltkreise zum Austauschen und Vergleichen (8,8',9,9') von Signalen des Regelungs-Microcontrollers (RMC) mit den entsprechenden Signalen des Überwachungs-Microcontrollers (ÜMC) und die Schaltkreise (15) zur Korrelation der Ventil-Ansteuerungssignale mit den Signalen der Nachbildungsschaltkreise (14) integrale Bestandteile des Regelungs-Microcontrollers (RMC) und des Überwachungs-Micrccontrollers (ÜMC) sind.

## Claims

1. A circuit configuration for a brake system with anti-lock control and/or traction slip control,
comprising circuits for conditioning sensor signals representative of the rotational behaviour of the individual vehicle wheels, controller circuits for analyzing and processing the conditioned sensor signals and for generating braking pressure control signals that drive solenoid valves inserted into the pressure fluid conduits of the brake system,
comprising monitoring circuits to which the conditioned sensor signals can be supplied and which, in case of a malfunction, de-activate or disconnect the control in part or completely, and which include circuits (7) for the speed conditioning, circuits (11) for generating signals derived from the wheel speed, such as deceleration signals and acceleration signals, jerk signals and reference signals,
and circuits for exchanging and comparing signals of the controller circuits with corresponding signals of the monitoring circuits,
**characterized** in that the monitoring circuits (3) include control algorithm reproduction circuits (14) for the simplified reproduction of the control algorithms, in particular for the determination of the control phases, which result when the derived signals are analyzed according to the algorithms of the controller circuits (2), and circuits (15) for the correlation of the output signals of the control algorithm reproduction circuits (14) with the braking pressure control signals.

2. A circuit configuration as claimed in claim 1, **characterized** in that the controller circuits (2) and the associated circuits for the speed conditioning are part of a control microcontroller (RMC), and the monitoring circuits (3) are part of a monitoring microcontroller (ÜMC), and in that the monitoring microcontroller (ÜMC) has a simplified structure in comparison with the control microcontroller (RMC).

3. A circuit configuration as claimed in claim 2, **characterized** in that a 16-bit high-performance microcontroller is provided as a control microcontroller (RMC), and an 8-bit microcontroller is provided as a monitoring microcontroller (ÜMC).

4. A circuit configuration as claimed in claim 2 or claim 3, **characterized** in that the circuits for exchanging and comparing (8, 8', 9, 9') signals of the control microcontroller (RMC) with the corresponding signals of the monitoring microcontroller (ÜMC) and the circuits (15) for the correlation of the valve-excitation signals with the signals of the reproduction circuits (14) are integral components of the control microcontroller (RMC) and the monitoring microcontroller (ÜMC).

## Revendications

1. Montage pour une installation de frein comportant un système de régulation d'antiblocage et/ou de régulation du glissement d'entraînement, et comportant
des circuits pour préparer des signaux de détection, qui reproduisent le comportement de rotation des différentes roues du véhicule, des circuits de régulation pour évaluer et traiter des signaux de détection préparés et pour produire des signaux de commande de la pression de freinage, qui commandent des soupapes magnétiques insérées dans les voies de circulation du fluide sous pression de l'installation de frein,
des circuits de contrôle, auxquels peuvent être envoyés les signaux de détection préparés et qui arrêtent et débranchent en totalité ou en partie la régulation dans le cas d'une perturbation et comprennent des circuits (7) pour préparer la vitesse, des circuits (11) pour produire des signaux dérivés de la vitesse de roue, tels que des signaux de décélération et d'accélération, des signaux d'à-coups et des signaux de référence, ainsi que
des circuits pour échanger des signaux des circuits de régulation et les comparer avec des signaux correspondants des circuits de contrôle,
caractérisé en ce que les circuits de contrôle (3) contiennent des circuits (14) de simulation d'algorithmes de régulation servant à simuler de façon simple les algorithmes de régulation, notamment pour la détermination des phases de régulation, qui sont obtenues lors de l'évaluation des signaux dérivés, en fonction des algorithmes des circuits de régulation (2), et des circuits (15) pour mettre en corrélation les signaux de sortie des circuits (14) de simulation des algorithmes de régulation avec les signaux de commande de la pression de freinage.

2. Montage suivant la revendication 1, caractérisé par le fait que le circuit de régulation (2) et les circuits associés de préparation de la vitesse font partie d'un microcontrôleur de régulation (RMC), et les circuits de contrôle (3) font partie d'un microcontrôleur de contrôle (ÜMC), et que le microcontrôleur de contrôle (ÜMC) possède une structure simplifiée par rapport à celle du microcontrôleur de régulation (RMC).

3. Montage suivant la revendication 2, caractérisé par le fait qu'il est prévu, comme microcontrôleur de régulation (RMC), un microcontrôleur de grande puissance à 16 bits et comme microcontrôleur de contrôle (ÜMC), un microcontrôleur à 8 bits.

4. Montage suivant la revendication 2 ou 3, caractérisé en ce que les circuits (8,8',9,9') pour échanger des signaux du microcontrôleur de régulation (RMC) et comparer ces signaux aux signaux correspondants du microcontrôleur de contrôle (ÜMC) et les circuits (15) servant à mettre en corrélation les signaux de commande de soupape avec les signaux des circuits de simulation (14) font partie intégrante du microcontrôleur de régulation (RMC) et du microcontrôleur de contrôle (ÜMC).
